# EUROPEAN PATENT APPLICATION

(11) **EP 2 302 888 A1**
(43) Date of publication of application: **30.03.2011**
(21) Application number: 09252289.5
(22) Date of filing: 29.09.2009
(51) Int. Cl.: H04M 3/36, H04Q 3/00

(54) **Telephone access network**

(71) Applicant: BRITISH TELECOMMUNICATIONS public limited company, London EC1A 7AJ (GB)
(72) Inventor: The designation of the inventor has not yet been filed
(74) Representative: Cardus, Alan Peter

(57) **Abstract**

The access network of a telephone network comprising the access network and a core network is configured to respond to transitions detected in one or more access line, between an off-hook state and an on-hook state, by generating signalling traffic towards the core network. The load imposed on network equipment as a result of excessive on/off hook transitions is minimised by monitoring an access line in the access network to detect transitions between the off-hook state and the on-hook state. The transitions detected are counted and the quantity of transitions detected over a time period is determined. Where the quantity exceeds a set level, the access network is reconfigured to inhibit generation of signalling traffic in respect of the access line towards the core network. The invention could be used to deal with fault conditions, such as spurious on/off hook events generated in faulty lines, malicious activity or to police quality of service, such as in the case of a low-cost tariff where the number of call attempts over a set time period is restricted.

## Description

This application relates to telephone access networks and managing operation thereof.

Next Generation Network Telecommunication Access (NGN TA) equipment - often termed Access Gateways (AGW) or Multi-Service Access Nodes (MSAN) - is typically designed to provide access to a variety of different subscriber services including: POTS, Centrex, Broadband, Derived POTS, ISDN Basic Rate Access, ISDN Primary Rate Access (e.g. ETSI, DASS2) or Virtual Private Network Services typically supported via protocols such as DPNSS1. Such equipment could also provide access to Private Network TDM Bearer services e.g. E1 or fractional E1 or direct Ethernet to end users.

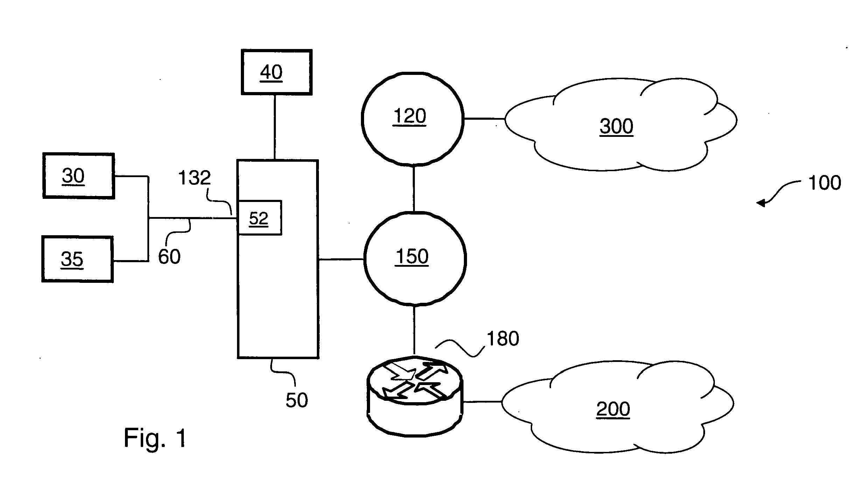

Figure 1 shows a NGN TA network 100 providing connection to user's devices 30, 35 via NGN TA equipment 50 (referred to as MSAN 50 from now on). MSAN 50 is controlled by element manger 40. NGN TA network 100 is able to provide both narrowband and broadband services to a user over a single connection. User's devices 30, 35 may include narrowband (POTS) devices such as telephones and broadband devices such as computers connected via a home router (not shown). MSAN 50 comprises, for each access line 60 (also known as a "local loop"), a combined POTS and DSL port 52 connected via access line termination 132 to user's devices 30, 35. For simplicity, only a single example of port 52 is shown although, in a typical system, there will be several hundred or more in each MSAN. In the conventional TA network, a separate POTS port and DSL port would be provided. On the network side, MSAN 50 is connected to call server or media gateway controller (MGC) 120 via Ethernet connection 150, also known as an "Ethernet back haul". MGC 120 is associated with a QoS enabled core IP network 300 that provides the media transport infrastructure for a VoIP-based PSTN. MGC 120 interacts with dependent MSANs via signalling carried over core IP network 300 to both originate and terminate narrowband voice calls. Interworking between the VoIP-based PSTN of which MGC 120 is a component and an existing, TDM-based PSTN will be via Media Gateway(s) (MGW - not shown). Similarly, interworking between the VoIP-based PSTN of MGC 120 and other VoIP-based PSTNs will be via one or more Border Gateways (BGW - not shown) with associated Signalling Firewalls. MSAN 50 also connects via Ethernet connection 150 to Ethernet broadband remote access server E-BRAS 180 which forms an interface to an internet service provider network (200), i.e. providing internet access to the user via a broadband connection. Internet service provider network 200 and core network 300 could be hosted in the same infrastructure - i.e. a common broadband network.

The wide range of services offered by such equipment and the consequent need to handle a wide range of signalling protocols, their associated alarm types, diagnostic test facilities, management capabilities and supported interfaces places a high processing demand on NGN TA equipment. NGN TA equipment can also experience a wide variation in traffic patterns; not least the POTS traffic profile with its classic "busy hours" at key points in the business day followed by high evening peaks caused in part by the network operators' tariffs. Very high loads can also be placed on the NGN TA equipment by tele-voting events; as associated with popular TV programmes.

Several overload protection schemes have evolved in industry standards to protect NGN TA equipment from POTS traffic overloads. Examples of such industry standards include ITU-T H.248.11, "Gateway control protocol: Media gateway overload control package", 11/2002 and ETSI NR (ETSI ES 283 039-4 V2.1.1, "Telecommunications and Internet converged Services and Protocols for Advanced Networking (TISPAN); NGN Overload Control Architecture; Part 4: Adaptative Control for the MGC", 04/2007). The ETSI NR concept proposes an overload control mechanism between MGCs and MSANs to protect the MGCs from becoming overloaded during the kind of mass call events mentioned above. Other sophisticated schemes have been developed to allow NGN TA equipment to support the high calling rates associated with ISDN Primary Rate Services.

A common architecture in NGN TA networks is that of MSANs parented on high capacity MGCs that control the setup and clear-down of speech paths (media) across a router-based (QoS enabled) IP network. The router-based IP network forms part of a core telephone network arranged for the transport between various TA networks of telephony traffic where speech is encoded into RTP packets according to defined CODEC types.

A considerable volume of signalling traffic (e.g. traffic according to IETF RFC 3435, "Media Gateway Control Protocol", 01/2003 or ITU-T H.2481, "Gateway control protocol: Version 3", 09/2005) is generated between an MSAN and a parent MGC simply in response to off-hook and on-hook signals generated by end-user equipment. Given sufficient intensity, an NGN TA overload control mechanism could be activated solely due to the volume of on- and off-hook events on NGN TA access lines. Once an MSAN has entered an overload condition, customer service is degraded with a proportion of outgoing call attempts receiving an equipment engaged tone to indicate that insufficient resources are available to support an outgoing call. A similar impact is felt on incoming traffic when the MSAN is in the overload state.

This invention relates to the protection of the NGN TA network from excessive traffic arising from off-hook and on-hook events on access lines. The invention is not restricted in its applicability just to NGN TA equipment but is also applicable to existing digital telephone exchange systems and subscriber access equipment/concentrators.

The invention proposes a method of detecting an access line or CPE associated with an unacceptable level of traffic, possibly becoming a hazard to the overall integrity of the system and risking degrading the service offered to other users. Accordingly, a method is proposed of operating an access network of a telephone network; in which the telephone network comprises the access network and a core network; and in which the access network comprises one or more access line. The access network is configured to respond to transitions between an off-hook state and an on-hook state in the or each access line by generating signalling traffic towards the core network. According to the method, an access line is monitored to detect transitions between the off-hook state and the on-hook state and a count is created of the transitions detected and, where the transitions count exceeds a set level, the access network is reconfigured to inhibit generation of signalling traffic in respect of the access line towards the core network. By inhibiting the generation of signaling traffic towards the core network in respect of an access line on which an excessive number of transitions has been detected, the core network is protected from signalling overload.

The method proposed is flexible and may be adapted to inter-work correctly with certain services that validly employ frequent periodic off-hook and on-hook events. Frequent call attempts, e.g. to a number which is temporarily unavailable, may generate a significant quantity of off-hook and on-hook events over quite a short period, even in the absence of a fault condition.

The invention can operate according to an embodiment to protect the NGN TA network from excessive traffic arising from false off-hook events on access lines. According to one aspect, address signalling is detected in the access line and, where sufficient valid address signalling is detected following a transition, the transition is not counted.

To reduce the risk of disabling a line in which the occurrence of false off-hook signals is sufficiently rare as to not pose a threat to correct operation of the network, the present invention provides a further aspect to reflect the frequency at which invalid off-hook signals are detected on a line. According to this aspect, the transitions count is decremented according to one of a number of policies, including: at set intervals; when no transition is detected within a set time interval ; and in dependence on a measure of traffic loading in the telephone network.

The invention also provides an access line switch for connecting calls between a plurality of access lines in a telephone access network and a telephone core network; in which the access line switch is configured to respond to transitions in each access line between an off-hook state and an on-hook state by generating signalling traffic towards the core network. The access line switch comprises: an interface for detecting transitions on each access line between an off-hook state and an on-hook state; an interface to the core network; a processor for generating signalling traffic towards the core network in response to transitions between an off-hook state and an on-hook state detected in each access line; and a counter for creating a count of the transitions detected on each access line. The access line switch is configured to inhibit generation of signalling traffic towards the core network in respect of an access line when the transitions count in respect of the access line exceeds a set level. The invention also provides a telephone access network comprising the access line switch.

Further features and advantages of the present invention will become apparent from the following description of embodiments thereof, presented by way of example only, and by reference to the accompanying drawings, wherein like reference numerals refer to like parts, and wherein:-
Figure 1 is a block diagram of a NGN TA network for implementing the invention;
Figures 2 is a block diagram of a NGN TA access line port for according to the invention.

The control function of the present invention detects access lines generating off/on-hook events occurring with excessive frequency and takes appropriate action to defend the telephone network from the potential detrimental effects of these events.

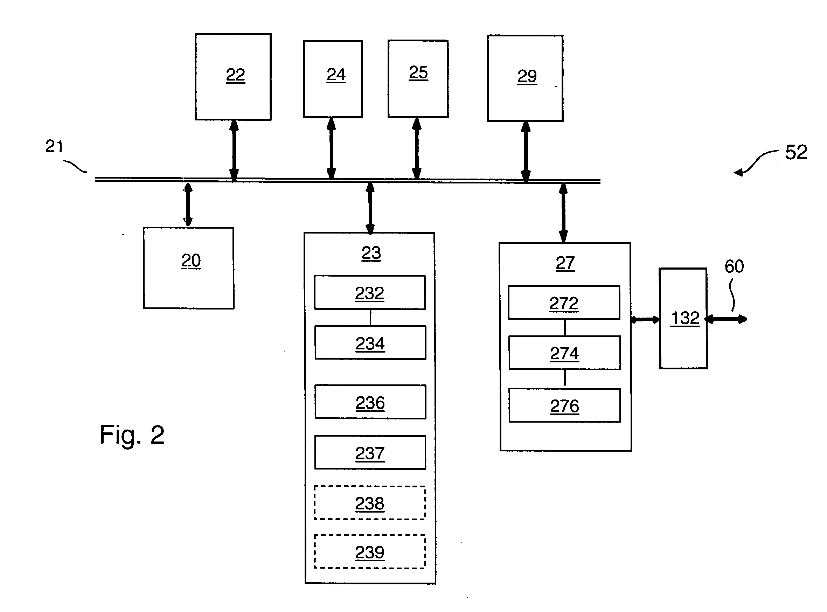

Each access line is controlled from MSAN 50 by a combined POTS and DSL port 52 (shown in detail in Figure 2). Each port 52 is controlled by a central processor (CPU) 20 arranged in communication with other elements of the port via connection bus 21. In practice, a number of ports may be controlled by a single CPU by multi-tasking. CPU 20 is arranged to execute stored program instructions and to manipulate data stored in one or more of storage device 22, for example: hard disk drive, floppy disk drive, optical disk drive and/or magnetic tape drive and memory devices including ROM 24 and RAM 25. Port 52 includes communications interface 27 for interfacing via access line termination 132 to external network components including to user's devices 30, 35 via NGN TA access line 60. Port 52 communicates with MSAN 50 (and ultimately with element manager 40 and with Ethernet backhaul 150) via internal interface 29, for example a message-based interface or internal Ethernet VPN. Communications interface 27 has conventional telephone and broadband access line interface circuitry 272, together with line monitor circuitry 274 to monitor the state of the line, for example, through detecting the voltage and current on the line and valid digits register 276.

As shown in Figure 2, port 52 includes counter/timer module 23. comprises CPU-accessible counters and registers comprising off-hook counter 232, threshold setting-and detection-means 234, line disable timer 236, count timer 237, and, optionally, timeout timer 238 and count decrementer 239.

According to a preferred embodiment, each part of counter/timer module 23 is implemented in hardware and may be based on a combination of standard digital integrated circuits or, preferably, provided in a single custom digital integrated circuit, such as a programmable logic array. According to a further, alternative embodiment, the functions of counter/timer module 23 are provided by operation of software located in one or other of storage device 22 and memory devices 24 and 25 and using registers in CPU 22 or RAM 25. According to this software embodiment, the count and parameter values may be held in RAM memory 25.

Off-hook counter 232 counts off-hook and, optionally, on-hook transitions on access line 60. Off-hook counter 232, incorporated in counter module 23, is incremented each time a transition on access line 60 to the off-hook state and, optionally, to the on-hook state, is detected by the line monitor circuitry 274 . Off-hook counter 232 is associated with a configurable threshold value which, if breached, will result in the access line being automatically disabled for a configurable period by the control function of the present invention. Off-hook counter 232 is provided with threshold setting- and detection-means 234 which determines when off-hook counter 232 breaches the threshold value set. The configurable threshold is defined by a count threshold parameter which is programmed into threshold setting- and detection-means 234. According to a preferred embodiment, threshold setting- and detection-means 234 is implemented as a register and comparator (not shown). The register is set with the count parameter value. The comparator is connected to both the register and off-hook timer 232 and arranged to perform a comparison between the values stored in each. A proposed range for the count threshold parameter is from 1 to 256, with a default setting of 20. A line-disable parameter defines a configurable period for which a line exhibiting unacceptable behaviour (i.e. when the off-hook count for the line exceeds the count threshold) is disabled by the control function. Disable timer 236 is activated on disabling the line and provides an indication of when the line disable time period, defined by the line-disable parameter, has expired, causing access line 60 to be re-enabled.. A proposed range for the line-disable parameter is from 1 to 120 minutes, with a default setting of 15 minutes.

Off-hook counter 232 is further provided with count timer 237, which, according to on embodiment, is set with a count time period parameter that defines a time period over which line transitions are counted by counter 232. At the end of each count time period, the comparator of threshold setting- and detection-means 234 is activated and the count value is compared with the count parameter value. Off-hook counter 232 is then reset.

According to a further preferred embodiment, where off-hook counter 232 is non-zero (indicating that transitions have been detected) but the configurable count threshold has not been breached, off-hook counter 232 is decremented periodically by means of count decrementer 239 based on a decrement interval which may be hard-wired into decrementer 239 or programmed there as a decrement interval parameter under control of CPU 20. A proposed range for the decrement interval is from 1 to 900 seconds, with a default setting of 20 seconds. Accordingly, in the absence of any further line transitions or where line transitions occur at a sufficiently low rate, off-hook counter 232 will be eventually decremented to zero. Count decrementer 239 may operate during both the on-hook and off-hook states i.e. during both call and idle states or, alternatively, only during the on-hook state, i.e. during idle, according to the preference of the network operator. When count decrementer 239 is employed, count timer 237 is not required.

It will be understood by the skilled reader that the above described port architecture is not limiting, but is merely an example of typical port and variations will be readily apparent to the skilled reader according to the specific requirements of a particular implementation. MSAN 50 will typically house a plurality of line cards, each line card having one or more ports 52 controlling a number of line interfaces 27.

A line may be disabled by removing the line feed voltage from the line in access line interface circuitry 272, hence preventing reception of further on- and off-hook events for the duration of the prescribed line disable period. Alternatively, a line may be disabled by MSAN 50 removing the line (or the port associated with that line) from a list of active lines (or ports) for the prescribed line disable period and thereby eliminating the associated processing and signalling load, should any further off/on-hook events occur on that line during the line disable period. Removal of a line from the list of active lines could be implemented by processor 20 not notifying MSAN 50 of any off- or on-hook events while the line is in the disabled state. In any case, the act of disabling an access line will result in inhibiting the generation of signalling traffic towards the core network in respect of the access line, thereby reducing the risk of overloading the network, The telephone network is operated under the control of an operator who is alerted to a line being disabled (taken out of service) due to the reaction of MSAN 50 to the detection of excessive off- or on-hook events.

A refinement of the invention, described next, seeks to distinguish between valid and false off-hook events and to prevent overloading the telephone network due to signalling caused by false of-hook transitions. A false off-hook event could be the result of a fault condition, such as a faulty intermittent connection in or across the line or malfunctioning CPE. In a preferred embodiment, line monitor circuitry 274 counts dial digits occurring on access line 60 following each off-hook transition and suppresses off-hook counter 232 such that it is not incremented when a transition to the off-hook state detected on access line 60 is followed by sufficient valid address signalling (as defined, below) prior to detection of a transition to the on-hook state on the same access line. A valid digits parameter stored in valid digits register 276 of line interface 27 defines a threshold for a minimum number of valid address signals or digits that need to be detected between an off-hook transition and an immediately subsequent on-hook transition to prevent off-hook counter 232 being incremented. Valid digits register 276 has a connection to line monitor circuitry 274 to make the valid digits parameter available for vetting detected line transitions. The suggested value of the valid digits parameter, i.e. the minimum quantity of valid address signals required to prevent off-hook counter 232 being incremented, is three.

Any off-hook transitions detected that are not associated with sufficient valid address signalling will be counted as false off-hook transitions. According to the present embodiment, where the quantity of false off-hook transitions detected over a time period exceeds a set level, the telephone network is reconfigured so that subsequent transitions in the access line are not responded to. This is achieved by disabling the line, as previously described.

A Boolean "valid-digits transition" parameter is used to record whether the number of digits received between a given off-hook, on-hook pair is greater than or equal to the configured threshold of valid digits parameter. The valid-digits transition parameter is preferably stored in RAM 25 under control of CPU 20.

Address signalling in the access network commonly takes the form of either dual-tone multi-frequency (DTMF) where audio-frequency signal tones are applied to the access line or loop-disconnect signalling where signal pulses are generated through making and breaking the access line loop, i.e.: involving on-hook, off-hook transitions. Loop disconnect signalling may be discriminated from spurious off/on-hook events by line monitor circuitry 274 taking note of cadence. The timing of loop disconnect signalling is well defined in terms of pulses per second (pps). For example, for 10pps each digit comprises a cadence comprising one or more sequences of nominally 66.66 ms on-hook state followed by 33.33 ms off-hook state.

MSAN 50 will generally apply a signalling timeout which has the effect that any digits detected more than the timeout period after the off-hook transition are ignored. The timeout period is, typically 20 seconds. Dial digits that are detected outside of the timeout period will not count as valid address signalling. Counter timer 23 is preferably further provided with timeout timer 238, which is set with a timeout period parameter that defines the time period following an off-hook transition within which dial digits are counted and is started on detection of an off-hook transition by line monitor circuitry 274.

To reduce the risk of disabling a line in which the occurrence of false off-hook signals is sufficiently rare as to not pose a threat to correct operation of the network, operation of the control function of the present invention may be modified, according to a further variant of the false off-hook embodiment, to reflect the frequency at which invalid off-hook signals are detected on a line. According to a preferred embodiment, where off-hook counter 232 is non-zero (indicating that false of-hook transitions have been detected) but the configurable count threshold has not been breached, off-hook counter 232 is decremented periodically by means of count decrementer. This is achieved by altering the operation of decrementer 239 to ignore valid transitions. Accordingly, in the absence of any further false off-hook events or where false off-hook events occur at a sufficiently low rate, off-hook counter 232 will be eventually be decremented to zero.

Advantageously, the rate of decrementing off-hook counter 232 may be modified to enable faster disabling of a line when the load on the associated MSAN 50 is higher. Accordingly, the decrement interval parameter could be assigned multiple values, for example stored in an array of registers (not shown) for loading count decrementer 239, each value relating to a different level of traffic loading in MSAN 50.

Preferably, the control function of the present invention works to detect lines requiring action on the basis of configurable criteria so as to account for a range of systems with different characteristics and, in particular, to ensure that valid activities that generate frequent off-hook and on-hook transitions are not adversely affected. An example of a service that validly employs periodic off-hook events is the periodic checking for messages left by unsuccessful callers where the presence of a message is indicated to the customer via a change in the dial tone characteristics. To check for a message, the checking service takes the telephone apparatus of-hook. Such services are configured with a periodic checking interval chosen so as not to pose a hazard to the telephone network. Other valid sources of frequent off-hook and on-hook transitions include repeated call attempts, e.g. to a number which is temporarily unavailable.

According to a preferred embodiment, the control function of the present invention is modified to take account of the occurrence of valid off-hook signals as an indication of correct operation of the access line and CPE. When off-hook counter 232 is non-zero (indicating that false of-hook transitions have been detected) but the count threshold has not been breached and where an off-hook transition followed by a minimum of quantity of valid address signals is detected, the counter is modified (on detecting the relevant on-hook transition) so as to reduce the likelihood that the threshold will be breached. This modification may take the form of decrementing the counter or resetting the counter to zero, according to the preference of the network operator.

According to a further embodiment, if an off-hook transition is detected and no subsequent digits are received, where the off-hook condition persists for longer than a timeout period (typically, the period of timeout to the parked line state ) then counter 232 is not incremented. The bases for not incrementing the counter in these circumstances are that (i) this behaviour does not fit the expected profile of repetitive off/on-hook events and (ii) in any case, the event repetition period will be sufficiently long that the event does not represent a threat to system integrity.

The control function of the present invention may be configured to raise an alarm when the quantity of off-hook transitions counted by counter 232 has breached the count threshold. An appropriate (date/time-stamped) "threshold-exceeded" alarm will be raised to indicate that an exception has been detected and appropriate action has been taken. The threshold-exceeded alarm will, preferably, identify the offending line or port to the network operator.

According to a further embodiment, where a line has been disabled for outgoing calls (for example, by removal of the line from the list of active lines) following breach of the count threshold, incoming calls may remain enabled on that line. To this end, a "both-way disable" parameter is provided to control activation of a "both-way disable" state. The both-way disable parameter is Boolean with a range of YES,NO and a default setting of YES - indicating that both-way disable is active.

Operation in the both-way disable state will now be described. When the both-way disable parameter is set (indicating both-way disable state enabled), then, on detecting a breach of the off-hook count threshold on off-hook counter 232, MSAN 50 generates and sends to MGC 120 (using H.248 or other appropriate signalling) a service state change message e.g. "Out_of_Service (Forced)". MGC 120 subsequently rejects any further incoming calls to the line in question and ensures that callers originating incoming calls to the disabled line receive an appropriate tone or announcement that the line is unavailable.

Where the both-way disable parameter is reset (indicating "both-way disable" state disabled), then, on detecting a breach of the off-hook count threshold on false off-hook counter 232, MSAN 50 does not generate the "out of service" message. In this situation, calls to the line will still be offered by MGC 120 to MSAN 50. On receipt of signalling for an incoming call, MSAN 50 will take appropriate action to enable the line for incoming calls (e.g. re-apply power to the line) and indicate call arrival (e.g.: by apply the ringing signal). The incoming call is then able to proceed in the normal way with answer-detection and supervision enabled. This should be a temporary state of affairs and the line is disabled again (e.g. by removal of power) once the incoming call is terminated.

Upon expiry of the prescribed line disable period, the line is re-enabled for outgoing service and (if both-way disable was enabled) also for incoming service. Any previously raised alarm relating to exceeding the off-hook count threshold value is cleared, but may remain in an historical alarm log store for use by the network operator.

The control function of the present invention can be arranged to cope with a line or a port being taken out of service and subsequently returned to service by the network operator. Accordingly, on detecting that a line or port has been returned to service after having been taken out of service, off-hook counter 232 for that line is reset to zero.

The invention may be implemented and parameters set either globally across an MSAN or individually per single or group of access line ports. Optionally, a Boolean control parameter is provided per port or per group of ports to allow for the control function of the present invention to be selectively enabled. According to a further preferred embodiment, MSAN 50 recognises an overall control parameter that, when activated, causes the control function of the present invention to be activated across all ports of MSAN 50 in accordance with network operator policy, although some lines may be marked exempt from activation by means of the overall control parameter.

Preferably, each access line port 52 on MSAN 50 is allocated a new operational state for indicating to the network operator that a port is out of service due to being disabled by the control function of the present invention. This state may be displayed on a user interface (not shown) of element manager 40.

The invention advantageously acts to minimise the load imposed on network equipment as a result of excessive on/off hook transitions. This could be used to deal with fault conditions, such as spurious on/off hook events generated in faulty lines, malicious activity or to police quality of service, such as in the case of a low-cost tariff where the number of call attempts over a set time period is restricted. The load imposed on network equipment as a result of excessive on/off hook transitions is minimised by monitoring an access line in the access network to detect transitions between the off-hook state and the on-hook state. The transitions detected are counted and the quantity of transitions detected is determined. Where the quantity exceeds a set level, the access network is reconfigured to inhibit generation of signalling traffic in respect of the access line towards the core network

Those skilled in the art will appreciate that the above embodiments of the invention are simplified for reasons of efficiency and that equivalents to the features described in the embodiments would be apparent to the skilled reader and that it is possible to incorporate features of one embodiment into other embodiments without departing from the scope of the invention. Where known equivalents exist to the functional elements of the embodiments, these are considered to be implicitly disclosed herein, unless specifically disclaimed. Accordingly, the ascope of the invention is not to be confined to the specific elements recited in the description but instead is to be determined by the scope of the claims, when construed in the context of the description, bearing in mind the common general knowledge of those skilled in the art. Unless the context clearly requires otherwise, throughout the description and the claims, the words "comprise", "comprising" and the like are to be construed in an inclusive as opposed to an exclusive or exhaustive sense; that is to say, in the sense of "including, but not limited to".

The invention has been described above with reference to ports. The skilled reader would appreciate that: conventionally, each access line is identified by the port on the MSAN at which the line is terminated, that is, each port is given an address within the MSAN and it is this address which is used by the MSAN element manger to identify an access line. The invention is not restricted in its applicability just to NGN TA equipment but is also applicable to existing digital telephone exchange systems and subscriber access equipment/concentrators. Although described with reference to detecting off-hook transitions (i.e. transitions from on-hook state to off-hook state), the invention may be implemented by detecting transitions in the opposite sense, i.e. off-hook to on-hook, or detecting transitions in both senses.

As will be understood by those skilled in the art, the invention may be implemented in software loaded onto one or more processor-controlled systems, as illustrated by way of example in Figure 2. Any or all of the software may be contained on a computer program product, including optically readable or magnetic media, such as a floppy disc, CD-ROM, or magnetic tape so that the program can be loaded onto storage device 22, or memory devices 24 and 25.

## Claims

1. A method of operating an access network of a telephone network; in which the telephone network comprises the access network and a core network; in which the access network comprises one or more access line; in which the access network is configured to respond to transitions between an off-hook state and an on-hook state in the or each access line by generating signalling traffic towards the core network;
in which the method includes:
monitoring an access line to detect transitions between the off-hook state and the on-hook state;
creating a count of the transitions detected and, where the transitions count exceeds a set level,
reconfiguring the access network to inhibit generation of signalling traffic in respect of the access line towards the core network.

2. A method as claimed in any claim 1, including decrementing the transitions count at set intervals.

3. A method as claimed in claim 1, including decrementing the transitions count when no transition is detected within a set time interval.

4. A method as claimed in any of claims 2 or 3 including modifying the rate of decrementing the transitions count in dependence on a measure of traffic loading in the telephone network.

5. A method as claimed in any above claim including creating the count of the transitions detected over a time period.

6. A method as claimed in any above claim including detecting address signalling in the access line, in which, where sufficient valid address signalling is detected following a transition, the transition is not counted.

7. A method as claimed in claim 6 in which valid address signalling comprises at least three digits occurring within a set time interval.

8. A method as claimed claim 6 in which valid address signalling comprises at least three digits occurring within a set time interval in which the at least three digits, taken together, identify a destination.

9. A method as claimed claim 6 in which valid address signalling comprises at least three digits occurring within a set time interval in which the at least three digits, taken together, form the start of a valid address.

10. A method as claimed in any above claim, including reconfiguring the access network by removing feed to the access line so that no further signalling is generated in the access line.

11. An access line switch for connecting calls between a plurality of access lines in a telephone access network and a telephone core network; in which the access line switch is configured to respond to transitions in each access line between an off-hook state and an on-hook state by generating signalling traffic towards the core network;
in which the access line switch comprises:
an interface for detecting transitions in each access line between an off-hook state and an on-hook state;
an interface to the core network;
a processor for generating signalling traffic towards the core network in response to transitions between an off-hook state and an on-hook state detected in each access line;
a counter for creating a count of the transitions detected in each access line; in which
the access line switch is configured to inhibit generation of signalling traffic towards the core network in respect of an access line when the transitions count in respect of the access line exceeds a set level.

12. A telephone access network comprising a plurality of access lines and the access line switch of claim 11.
